# EUROPÄISCHE PATENTANMELDUNG

(11) **EP 4 497 932 A2**
(43) Veröffentlichungstag der Anmeldung: **29.01.2025**
(21) Anmeldenummer: 24188913.8
(22) Anmeldetag: 16.07.2024
(51) Int. Cl.: F02D 41/02, A01D 41/12

(54) **VERFAHREN ZUM BETREIBEN EINES LANDWIRTSCHAFTLICHEN NUTZFAHRZEUGS UND LANDWIRTSCHAFTLICHES NUTZFAHRZEUG**

(30) Priorität: 25.07.2023 DE 102023119701
(71) Anmelder: KRONE Agriculture SE, 48480 Spelle (DE); Lemken GmbH & Co KG, 46519 Alpen (DE)
(72) Erfinder: Horstmann, Jan, 48429 Rheine (DE); Grever, Alexander, 49078 Osnabrück (DE); Westphal, Steffen, 49328 Melle (DE); Müter, Matthias, 53179 Bonn (DE); Schoofs, Dominik, 47589 Uedern (DE)
(74) Vertreter: Weeg, Thomas

(57) **Zusammenfassung**

Die Erfindung betrifft ein Verfahren zum Betreiben eines landwirtschaftlichen Nutzfahrzeugs, das einen Verbrennungsmotor, eine Abgasnachbehandlungseinrichtung und eine Steuerungseinrichtung umfasst, wobei der Verbrennungsmotor durch Verbrennung eines Kraftstoffs Abgase erzeugt, die Abgasnachbehandlungseinrichtung die Abgase nachbehandelt, und die Steuerungseinrichtung eine Regeneration der Abgasnachbehandlungseinrichtung steuert, wobei mittels eines Sensors eine Umgebungsvariable ermittelt wird und die Regeneration in Abhängigkeit von der Umgebungsvariablen und/oder von zumindest einem Parameter eines landwirtschaftlichen Prozesses, den das Nutzfahrzeug automatisch durchführt, gesteuert wird. Die Erfindung betrifft ferner ein landwirtschaftliches Nutzfahrzeug, das zur Durchführung eines solchen Verfahrens eingerichtet ist.

## Beschreibung

Die vorliegende Erfindung betrifft ein Verfahren zum Betreiben eines landwirtschaftlichen Nutzfahrzeugs, das einen Verbrennungsmotor, eine Abgasnachbehandlungseinrichtung und eine Steuerungseinrichtung umfasst. Der Verbrennungsmotor erzeugt durch eine Verbrennung eines Kraftstoffs Abgase. Die Abgasnachbehandlungseinrichtung behandelt die Abgase nach. Die Steuerungseinrichtung steuert eine Regeneration der Abgasnachbehandlungseinrichtung. Die Erfindung betrifft ferner ein solches landwirtschaftliches Nutzfahrzeug.

In landwirtschaftlichen Nutzfahrzeugen, d.h. in Landmaschinen, werden nach wie vor hauptsächlich Verbrennungsmotoren eingesetzt, um Leistung für die auszuführenden landwirtschaftlichen Prozesse bereitzustellen. Zur Einhaltung von in vielen Ländern gesetzlich vorgeschriebenen Emissionsgrenzwerten ist eine Nachbehandlung der Abgase der Verbrennungsmotoren durch Abgasnachbehandlungseinrichtungen nötig.

Bekannte Abgasnachbehandlungseinrichtungen sind je nach Ausmaß der Nachbehandlung der Abgase regelmäßig zu regenerieren. Die Regeneration wird bei den bekannten Nutzfahrzeugen unmittelbar auf eine Erkennung eines Regenerationsbedarfs hin durchgeführt. Bekannt ist, dass ein Bediener den Beginn der Regeneration zu quittieren hat.

Es hat sich gezeigt, dass mit der Regeneration Risiken und Einschränkungen in Bezug auf die landwirtschaftlichen Prozesse einhergehen. Beispielsweise kommt es während der Regeneration zu erhöhten Abgastemperaturen, mit denen eine erhöhte Brandgefahr einhergeht. Weiter beispielsweise sind die landwirtschaftlichen Prozesse häufig an ungeeigneten Punkten zu unterbrechen und auf die Regeneration hin nur unter hohem Aufwand fortzusetzen.

Aufgabe der Erfindung ist es, die mit der Regeneration einhergehenden Risiken und Einschränkungen zu verringern.

Die Aufgabe wird durch ein Verfahren mit den Merkmalen des Patentanspruchs 1, ein Verfahren mit den Merkmalen des Patentanspruchs 8, sowie durch ein landwirtschaftliches Nutzfahrzeug mit den Merkmalen des Patentanspruchs 13 gelöst.

Das erste erfindungsgemäße Verfahren zeichnet sich dadurch aus, dass mittels eines Sensors eine Umgebungsvariable ermittelt wird und die Regeneration in Abhängigkeit von der Umgebungsvariablen gesteuert wird.

Das erste erfindungsgemäße Verfahren ermöglicht es, dass die Regeneration nicht rein in Abhängigkeit vom Zustand der Abgasnachbehandlungseinrichtung, sondern auch in Abhängigkeit davon durchgeführt wird, ob die Umgebung für die Regeneration geeignet ist.

Das landwirtschaftliche Nutzfahrzeug ist insbesondere zum Einsatz auf landwirtschaftlichen Feldern ausgebildet. Das Nutzfahrzeug verfügt insbesondere über ein Fahrwerk und einen Fahrantrieb. Das Nutzfahrzeug ist bevorzugt als Träger- und/oder Zugmaschine, z.B. als Traktor, ausgebildet, mit der unterschiedlichen landwirtschaftliche Arbeitsgeräte zu koppeln und zu betreiben sind. Alternativ ist das Nutzfahrzeug als selbstfahrende Arbeitsmaschine, z.B. als Erntemaschine wie etwa ein Feldhäcksler, ausgebildet, das ein Arbeitsgerät umfasst. Beispielhafte Arbeitsgeräte sind Bodenbearbeitungsgeräte wie Pflüge, Grubber und Eggen oder Erntemaschinen wie Mähwerke, Schwader und Ballenpressen.

Bevorzugt ist der Verbrennungsmotor als Dieselmotor ausgebildet. Dieselmotoren stoßen Rußpartikel als Teil ihrer Abgase aus. Je nach Zusammensetzung der Abgase und/oder einzuhaltender Emissionsgrenzwerte kann die Abgasnachbehandlung durch unterschiedliche Abgasnachbehandlungseinrichtungen erfolgen. Insbesondere bei Ausbildung des Verbrennungsmotors als Dieselmotor handelt es sich bei der beim ersten erfindungsgemäßen Verfahren genutzten Abgasnachbehandlungseinrichtung um einen Partikelfilter, auch Diesel- oder Rußpartikelfilter genannt. Der Partikelfilter weist üblicherweise zumindest eine poröse, von den Abgasen durchströmte Wand auf, an der sich Partikel der Abgase ablagern und so nicht in die Umwelt ausgestoßen werden.

Bevorzugt umfasst die Abgasnachbehandlungseinrichtung einen Katalysator. Der Katalysator weist ein katalytisches Mittel zur Erhöhung einer Reaktionsgeschwindigkeit einer chemischen Reaktion auf, bei der die Schadstoffe der Abgase umgewandelt und/oder gebunden werden. Das katalytische Mittel kann als eine dünne Schicht an Innenwänden des Katalysators aufgetragen sein. An dem katalytischen Mittel können sich Unreinheiten der Verbrennung ablagern, sodass der Katalysator seine chemischen Eigenschaften im Betrieb allmählich verliert.

Bevorzugt behandelt die Abgasnachbehandlungseinrichtung die Abgase sowohl katalytisch als auch filternd nach. Vorzugsweise ist hierzu auf die zumindest eine poröse Wand der als Partikelfilter ausgebildeten Abgasnachbehandlungseinrichtung das katalytische Mittel aufgebracht. Bevorzugt umfasst das Nutzfahrzeug mehrere Abgasnachbehandlungseinrichtungen.

Abgasnachbehandlungseinrichtungen wie Partikelfilter laden sich betriebsbedingt auf. Unter der Aufladung wird insbesondere eine Ansammlung von Rußpartikeln an der porösen Wand verstanden. Mit zunehmender Aufladung wird das Durchströmen der Wand und damit der Ausstoß der Abgase erschwert. Das beeinflusst die Kraftstoffeffizienz des Verbrennungsmotors, die Funktionsweise der Nachbehandlung und/oder die Lebensdauer des Verbrennungsmotors nachteilig.

Die Regeneration des verwendeten Partikelfilters dient dazu, die Aufladung des Partikelfilters zu reversieren, d.h. die an der porösen Wand angesammelten Rußpartikel abzubauen. Die Regeneration erfolgt bevorzugt durch ein sog. Freibrennen des Dieselpartikelfilters. Das Freibrennen erfolgt beispielsweise durch eine Erhöhung einer Abgastemperatur, durch die die angesammelten Rußpartikel abbauende chemische Reaktionen stattfinden. Bei der Regeneration von Dieselpartikelfiltern kann zwischen einer passiven Regeneration und einer aktiven Regeneration unterschieden werden.

Die passive Regeneration erfolgt automatisch, wenn im normalen Betrieb des jeweiligen Nutzfahrzeuges eine für die chemischen Reaktionen ausreichende Abgastemperatur erreicht ist. Die wird üblicherweise dann erreicht, wenn der Verbrennungsmotor über einen längeren Zeitraum mit einer hohen Auslastung betrieben wird. Die passive Regeneration wird insbesondere nicht durch die Steuerungseinrichtung ausgelöst oder gesteuert. Je nach Auslastung des Verbrennungsmotors und beispielsweise der Umgebungstemperaturen findet keine passive Regeneration statt oder reicht die passive Regeneration nicht für den beabsichtigten Abbau angesammelter Rußpartikel aus. In diesen Fällen hat die aktive Regeneration durchgeführt zu werden. Die Erfindung setzt die Möglichkeit zu einer passiven Regeneration jedoch nicht voraus.

Die Regeneration als Schritt der erfindungsgemäßen Verfahren, die insbesondere als aktive Regeneration zu verstehen ist, wird von der Steuerungseinrichtung gesteuert. Die Steuerungseinrichtung ist bevorzugt eine elektronische Einrichtung, die zumindest teilweise von dem Nutzfahrzeug umfasst ist. Das Steuern der Regeneration umfasst insbesondere ein Einleiten, ein Verhindern, ein Unterbrechen, ein Aussetzen und/oder die Beeinflussung eines Ablaufes der Regeneration. Die Steuerungseinrichtung steuert die Regeneration bevorzugt vollständig selbstständig oder fordert optional, insbesondere nach einer Berücksichtigung der Umgebungsvariablen, eine Freigabe zur Durchführung der Regeneration durch einen Betreiber des Nutzfahrzeugs. Die Freigabe kann vorzugsweise lokal am Nutzfahrzeug oder von einem entfernten Arbeitsplatz aus, der drahtlos mit der Steuerungseinrichtung verbunden ist, erteilt werden.

Die Regeneration wird üblicherweise im Stillstand des Nutzfahrzeuges durchgeführt und kann bis zu 60 Minuten andauern. Für die Regeneration muss die Abgastemperatur üblicherweise auf über 500°C erhöht werden. Die Erhöhung der Abgastemperatur wird beispielsweise durch eine Änderung eines Einspritzverhaltens des Verbrennungsmotors erreicht. Dazu ist die Steuerungseinrichtung bevorzugt mit einem Motorsteuergerät des Verbrennungsmotors gekoppelt oder sie umfasst bevorzugt das Motorsteuergerät. Insbesondere erfolgt zur Erhöhung der Abgastemperatur eine Nacheinspritzung des Kraftstoffs.

Bevorzugt umfasst das Nutzfahrzeug den Sensor. Der Sensor ist, falls das Nutzfahrzeug eine Fahrerkabine umfasst, insbesondere außerhalb dieser angeordnet. Der Sensor ist bevorzugt derart angeordnet, dass er an die das Nutzfahrzeug umgebende Umgebung angrenzt und/oder von einer Nutzfahrzeugoberfläche abgewandt angeordnet ist. Der Sensor misst die Umgebungsvariable bevorzugt unmittelbar oder dient mittelbar zu seiner Messung. Der Sensor ist insbesondere mit der Steuerungseinrichtung verbunden.

Die Umgebungsvariable enthält eine auf eine Umgebung des landwirtschaftlichen Nutzfahrzeugs, d.h. einen an das Nutzfahrzeug angrenzenden, umliegenden Raum, bezogene Information. Die Umgebungsvariable ist vorzugsweise eine physikalische Größe wie eine Strecke oder eine Temperatur. Die Umgebungsvariable ist bevorzugt eine von der Lage des Nutzfahrzeuges abhängige Variable. Bevorzugt oder zusätzlich beschreibt die Umgebungsvariable eine Eigenschaft von Objekten in lokaler Nähe zum Nutzfahrzeug, insbesondere in Relation zum Nutzfahrzeug. In Abgrenzung dazu ist unter der Umgebungsvariablen beispielsweise keine von dem Betreiber des Nutzfahrzeuges eingegebene Information zu verstehen.

Bei der Umgebungsvariablen handelt es sich bevorzugt um eine während des Betriebes des Nutzfahrzeuges veränderliche Größe. Die Umgebungsvariable dient insbesondere dazu, zu prüfen, ob eine Umgebungsbedingung erfüllt ist oder nicht. Dazu gleicht die Steuerungseinrichtung die Umgebungsvariable insbesondere mit der Umgebungsbedingung ab. Die Erfüllung der Umgebungsbedingung ist in diesem Fall eine Voraussetzung für die Regeneration. Durch diese Verwendung der Umgebungsvariablen werden Risiken für die Umgebung automatisch umgangen, ohne den Betreiber mit dem Abgleich zu belasten.

Das erste erfindungsgemäße Verfahren ist für die Anwendung in autonomen landwirtschaftlichen Nutzfahrzeugen besonders vorteilhaft. Die Erfindung ist jedoch nicht auf autonom betriebene landwirtschaftliche Nutzfahrzeuge beschränkt, sondern erstreckt sich auf verschiedene Ausführungstypen von landwirtschaftlichen Nutzfahrzeugen.

Bevorzugt wird die Regeneration derart gesteuert, dass ein Zeitpunkt eines Beginns der Regeneration in Abhängigkeit von der Umgebungsvariablen bestimmt wird. Das bedeutet, dass die Steuerungseinrichtung in Abhängigkeit von der Umgebungsvariablen entscheidet, ob die Regeneration eingeleitet oder durchgeführt wird oder nicht. Falls die Regeneration aufgrund der Umgebungsvariablen nicht eingeleitet oder durchgeführt wird, wird die Umgebungsvariable insbesondere zu einem späteren Zeitpunkt noch einmal mit der Umgebungsbedingung abgeglichen. Dadurch ist zu erreichen, dass die erhöhten Abgastemperaturen nicht in dafür ungeeigneten Umgebungen entstehen. Alternativ oder zusätzlich wählt die Steuerungseinrichtung bevorzugt einen Ablauf der Regeneration, insbesondere einen Abgastemperaturverlauf, in Abhängigkeit von der Umgebungsvariablen aus.

Bevorzugt wird mittels des Sensors ein Abstand von einer Feldgrenze eines landwirtschaftlichen Feldes, auf dem das Nutzfahrzeug betrieben wird, als Umgebungsvariable ermittelt. Dabei wird insbesondere der Abstand des Sensors und/oder des Nutzfahrzeuges von der Feldgrenze ermittelt. In diesem Fall ist die Umgebungsbedingung insbesondere, dass der Abstand mindestens so groß ist wie ein hinterlegter Minimalabstand. Erfahrungsgemäß ist an der Feldgrenze mit Hecken, Bäumen und anderer Vegetation sowie mit Strom- und/oder Telefonmasten zu rechnen, die bei Unterschreitung des Minimalabstandes vom Abgas entzündet werden können. Deshalb ist durch die Verwendung des Abstandes von der Feldgrenze als Umgebungsvariable das mit der Regeneration einhergehende Brandrisiko erheblich zu verringern.

Weiter bevorzugt wird mittels des Sensors ein Abstand von einem nächstliegenden Objekt der Umgebung als Umgebungsvariable ermittelt. Dabei wird insbesondere der Abstand des Sensors und/oder des Nutzfahrzeuges von dem Objekt ermittelt. Als Objekt werden bevorzugt solche insbesondere immobilen Körper betrachtet, die sich oberhalb des Bodens, auf dem das Nutzfahrzeug aufsteht, besonders bevorzugt zumindest auf einer Höhe eines Endrohrs einer die Abgasnachbehandlungseinrichtung umfassenden Abgasanlage des Nutzfahrzeuges, erstrecken. In diesem Fall ist die Umgebungsbedingung insbesondere, dass der Abstand mindestens so groß ist wie ein hinterlegter Minimalabstand. Das Objekt ist als Teil der Umgebung des Nutzfahrzeugs zu verstehen und kann insbesondere ein Baum oder ein Gebäude sein. Durch die Verwendung des Abstandes von dem Objekt als Umgebungsvariable wird eine Gefährdung des Objekts durch die heißen Abgase ausgeschlossen.

Durch den Abstand vom Objekt wird ein an das Nutzfahrzeug angrenzender Raum definiert, wobei die Regeneration durchgeführt wird, wenn der Raum frei von dem nächstliegenden Objekt ist. Der Raum ist dabei als ein gedachter Raum anzusehen, der sich oberhalb einer Aufstandsebene des Nutzfahrzeugs erstreckt. Insbesondere kann sich der Raum auch oberhalb des Nutzfahrzeugs erstrecken. In dem Fall, dass es sich bei dem nächstliegenden Objekt um einen Baum handelt, wird insbesondere auch eine Entzündung von Geäst ausgeschlossen, das sich bis oberhalb des Nutzfahrzeugs erstreckt. Gleiches gilt für den Fall, dass sich oberhalb des landwirtschaftlichen Nutzfahrzeugs eine Gebäudedecke befindet.

Der Abstand von der Feldgrenze und/oder der Abstand vom Objekt sind/ist vorzugsweise als ein zumindest anteilig oder vollständig parallel zu der Aufstandsebene des Nutzfahrzeugs gemessener Abstand definiert. Das gleiche gilt für den Minimalabstand. Dieser beträgt vorzugsweise mindestens 10 Meter. Je nachdem, ob der Abstand von der Feldgrenze oder von dem Objekt gemessen wird oder um welche Art von Objekt es sich handelt, werden vorzugsweise unterschiedliche Minimalabstände verwendet.

Bevorzugt wird als Sensor ein GPS-Sensor des Nutzfahrzeuges verwendet. Die Steuerungseinrichtung verarbeitet dabei Positionsdaten, die der GPS-Sensor empfängt. Um den Abstand zu bestimmen, werden die Positionsdaten bevorzugt mit Navigationsdaten abgeglichen. Dafür umfassen die Navigationsdaten zumindest eine Standortinformation zu der Feldgrenze und/oder dem Objekt. Die Verwendung des GPS-Sensors stellt eine kostengünstige Möglichkeit zur Abstandsbestimmung dar, insbesondere da ein solcher in landwirtschaftlichen Nutzfahrzeugen oftmals bereits vorhanden ist.

Es ist weiterhin bevorzugt, dass die Navigationsdaten eine Karte umfassen, in der zumindest ein erster Bereich als nicht zur Regeneration geeigneter Bereich gekennzeichnet ist. Der erste Bereich kann eine öffentliche Straße, einen Wald und/oder einen Hof darstellen. Die Regeneration wird vorzugsweise in Abhängigkeit davon gesteuert, dass das Nutzfahrzeug mindestens den Minimalabstand von dem ersten Bereich hat. Alternativ oder zusätzlich ist zumindest ein zweiter Bereich als zur Regeneration geeigneter Bereich in der Karte gekennzeichnet ist. Zum Beispiel kann es sich bei dem zweiten Bereich um einen für die Regeneration geeigneten Stellplatz des Nutzfahrzeugs handeln. Durch die Vorgabe des ersten und/oder zweiten Bereichs werden die Arbeitsautonomie des Nutzfahrzeugs gesteigert und die durch die Regeneration einhergehenden Risiken vermindert.

Die Navigationsdaten sind vorzugsweise in einem von der Steuerungseinrichtung auslesbaren Speicher hinterlegt. Alternativ oder zusätzlich können die Navigationsdaten von der Steuerungseinrichtung über eine, insbesondere drahtlose, Datenschnittstelle empfangen werden oder auf einem nicht von dem Nutzfahrzeug umfassten Teil der Steuerungseinrichtung hinterlegt sein, der insbesondere auch den Abgleich macht.

Weiterhin bevorzugt wird als Sensor ein Objekterfassungssensor des Nutzfahrzeuges verwendet. Der Objekterfassungssensor ist vom Nutzfahrzeug aus nach außen gerichtet und erlaubt die Ermittlung der Umgebungsvariablen, insbesondere ohne, dass dazu hinterlegte Daten oder eine drahtlose Datenverbindung zu einem vom Nutzfahrzeug beabstandeten Arbeitsplatz nötig sind. Der Objekterfassungssensor ist insbesondere zur Aussendung von Strahlung und zum Empfang reflektierter Strahlung ausgebildet. Die Abstandsermittlung durch den Objekterfassungssensor erfolgt alternativ oder zusätzlich zur Abstandsermittlung durch den GPS-Sensor. Mit dem Objekterfassungssensor können Objekte unabhängig davon erfasst werden, ob sie in den Navigationsdaten hinterlegt sind. Die Risiken der Regeneration können demzufolge besonders gut vermieden werden. Eine besonders hohe Zuverlässigkeit besteht, wenn die Abstandsermittlung sowohl durch den Objekterfassungssensor als auch durch den GPS-Sensor erfolgt. Der Objekterfassungssensor ist bevorzugt als ein Lasersensor, ein Ultraschallsensor oder ein optischer Sensor ausgebildet. Diese Sensortypen haben sich im Bereich der Landwirtschaft als zuverlässig erwiesen.

Es ist weiterhin bevorzugt, dass der Objekterfassungssensor zumindest eine Messrichtung hat, die zumindest anteilig oder vollständig parallel oder zumindest anteilig oder vollständig rechtwinklig zu der Aufstandsebene des Nutzfahrzeuges ausgerichtet ist. Insbesondere weist der Objekterfassungssensor ein Sichtfeld auf, wobei die Messrichtung eine Mitte des Sichtfeldes definiert. Als anteilig parallel zur Aufstandsebene wird die Messrichtung dann angesehen, wenn sie nicht rechtwinklig zur Aufstandsebene ausgerichtet ist. Ebenso wird die Messrichtung als anteilig rechtwinklig zur Aufstandsebene angesehen, wenn sie nicht parallel zur Aufstandsebene ausgerichtet ist. Der Objekterfassungssensor ist zur Seite und/oder nach oben gerichtet, insbesondere im Bereich des Endrohres, wo die Brandgefahr am größten ist.

Die Regeneration wird von der Steuerungseinrichtung bevorzugt in Abhängigkeit von mehreren Umgebungsvariablen gesteuert, die durch unterschiedliche Sensoren, insbesondere Objekterfassungssensoren ermittelt wurden. Bevorzugt weist das Nutzfahrzeug eine Vielzahl der Objekterfassungssensoren auf, die unterschiedlich ausgerichtet sind, sodass die Sichtfelder versetzt und/oder überlappend zueinander angeordnet sind. Dadurch kann die Umgebung abhängig von den Messrichtungen der Objekterfassungssensoren in mehrere Abschnitte unterteilt sein, wobei jeder Abschnitt unabhängig voneinander erfasst werden kann. Vorteilhaft kann so die Objekterfassung selbst bei Ausfall eines der Objekterfassungssensoren zumindest noch teilweise erfolgen. Die Zuverlässigkeit der Objekterfassung kann zusätzlich erhöht werden, indem zwei oder mehr Objekterfassungssensoren redundant zueinander, z.B. mit gleichen und/oder überlappenden Sichtfeldern, betrieben werden.

Außerdem ist es bevorzugt, dass der Objekterfassungssensor mit einer Objekterkennung ausgestattet ist. Dies erlaubt es, einen Objekttyp des Objekts zu erkennen. In dieser bevorzugten Ausführungsform wird der Objekttyp als Umgebungsvariable genutzt. Speziell ist es dabei vorgesehen, den Zeitpunkt des Beginns der Regeneration und/oder den Minimalabstand von dem Objekt in Abhängigkeit vom Objekttyp zu bestimmen. So kann die Regenerationssteuerung an ein durch den Objekttyp gekennzeichnetes Gefahrenpotential wie die Entzündlichkeit des Objekts angepasst werden.

Das zweite erfindungsgemäße Verfahren, das insbesondere eine Weiterbildung des vorbeschriebenen Verfahrens ist oder mit einzelnen der vorbeschriebenen Merkmals erfindungsgemäß weiterzubilden ist, zeichnet sich dadurch aus, dass die Regeneration in Abhängigkeit von zumindest einem Parameter eines landwirtschaftlichen Prozesses, den das Nutzfahrzeug automatisch durchführt, gesteuert wird.

Der Prozess ist im Weitesten Sinne als ein Prozess zur Herstellung von tierischen und/oder pflanzlichen Produkten anzusehen. Bevorzugt dient er einer Bearbeitung eines landwirtschaftlichen Feldes. Das schließt eine Bodenbearbeitung ebenso wie eine Bearbeitung von auf dem Feld gewachsenem Erntegut ein. Generell kann der Prozess zur Bodenbearbeitung, zur Aussaat, zur Düngung, zur Ausbringung von Pflanzenschutzmitteln, zum Mähen, zum Aufsammeln von Erntegut, zum Pressen, zum Dreschen, zum Häckseln, zur Silageherstellung, zur Futtervermischung und/oder zur Futterausbringung vorgesehen sein. Der Prozess stellt einen Arbeitsablauf dar, den das Nutzfahrzeug insbesondere ohne die Notwendigkeit eines Eingreifens durch den Betreiber durchführt. Der Prozess wird durch den Betreiber unter Vorgabe von Bedingungen angelegt. Der zumindest eine Parameter wird durch den Betreiber eingegeben oder auf Basis von Eingaben des Betreiber berechnet. Besonders bevorzugt ist das landwirtschaftliche Nutzfahrzeug in diesem Zusammenhang als ein autonomes Nutzfahrzeug ausgeführt, dass den Prozess vollautomatisch ausführt.

Der zumindest eine Parameter kennzeichnet, d.h. definiert, den landwirtschaftlichen Prozess. Als Parameter kommen vorzugsweise die folgenden Informationen oder Teile davon in Frage:
- Fahrtroute,
- Fahrgeschwindigkeit,
- Nutzfahrzeugdaten,
- Antriebsleistung,
- Bearbeitungsart
- Bearbeitungsdauer
- Anbaugerät(typ)
- Stellung des Anbaugerätes
- Bearbeitungstiefe
- Arbeitsbreite
- Ernteguteigenschaft (z.B. Feuchte, Ballendurchmesser)
- Feldeigenschaft

Da die Regeneration in Abhängigkeit vom Parameter und damit vom Prozess gesteuert wird, wird mit dem Verfahren eine an den Prozess angepasste Regenerationssteuerung erreicht. Das Verfahren bietet daher den Vorteil, dass die Abgasnachbehandlungseinrichtung nicht nur unmittelbar bei Erkennung einer Notwendigkeit regeneriert wird, womit regelmäßig Unterbrechungen des Prozesses an ungeeigneten Stellen einhergehen, sondern, dass die Regeneration sinnvoll in den Prozess integriert wird.

Bevorzugt bestimmt die Steuerungseinrichtung zumindest einen zukünftigen Zeitpunkt, zu dem ein Füllkennwert der Abgasnachbehandlungseinrichtung, der einen Bedarf zur Regeneration kennzeichnet, einen Regenerationsgrenzwert erreicht, anhand des Parameters prädiktiv. Der Zeitpunkt wird also im Vorhinein vorausberechnet. Es handelt sich dabei um eine parameterbasierte Abschätzung, wobei der prädiktiv bestimmte Zeitpunkt möglichst dem Zeitpunkt entsprechen soll, zu dem der Füllkennwert später tatsächlich den Regenerationskennwert erreicht. Abweichungen beispielsweise aufgrund von nicht abschließend vorherzusagenden Bodenverhältnissen sind jedoch nicht unerwartet. Etwaige zu erwartende passive Regenerationen fließen bevorzugt in die prädiktive Bestimmung mit ein. Vorzugsweise wird nicht nur der Zeitpunkt für den einen Regenerationsgrenzwert bestimmt, sondern ein Verlauf des Füllkennwertes für den gesamten Prozess bestimmt, der insbesondere auch etwaige passive Regenerationen berücksichtigt. Alternativ oder zusätzlich zum Zeitpunkt wird ein Wegpunkt entlang der Fahrtroute bestimmt. Alternativ oder zusätzlich wird ein Fortschrittspunkt entlang einer den Prozess definierenden Befehlskette bestimmt. Der Zeitpunkt ist bevorzugt anhand der den Prozess definierenden Parameter in den Wegpunkt oder den Fortschrittpunkt zu übersetzen oder lässt sich auf Basis des Weg- oder Fortschrittpunktes anhand zumindest eines Parameters ermitteln. Der Regenerationsgrenzwert ist insbesondere ein hinterlegter Wert, bei dessen Erreichung die Regeneration durchgeführt werden soll.

Auf die prädiktive Bestimmung, d.h. Vorhersage, des Zeitpunktes hin wird bevorzugt geprüft, in welchem Prozessstadium das Nutzfahrzeug und ggf. das Anbaugerät zu dem Zeitpunkt sein werden. Sollte das Prozessstadium nicht oder schlecht mit der Regeneration, insbesondere mit der Unterbrechung des Prozesses, vereinbar sein, wird der Zeitpunkt der tatsächlichen Einleitung der Regeneration besonders bevorzugt verschoben. Im Falle eines Pfluges als Arbeitsgerät wäre beispielsweise ein Prozessstadium, in dem die Pflugschare durch die Erde bewegt werden, ungeeignet für die Unterbrechung, da das Nutzfahrzeug bei in der Erde angeordneten Pflugscharen nach der Unterbrechung nur schwer aus dem Stand anfahren könnte und durch die zwischenzeitlichen geringeren Fahrgeschwindigkeiten eine unebene Bodenoberfläche geschaffen würde.

Der Füllkennwert dient zu einer Quantifizierung des Regenerationsbedarfs. In der bevorzugten Ausführungsform der Abgasnachbehandlungseinrichtung als Dieselpartikelfilter dient der Füllkennwert alternativ oder zusätzlich zur Quantifizierung der Aufladung. Der Regenerationsgrenzwert ist bevorzugt in einem Speicher hinterlegt und/oder durch eine Benutzereingabe anpassbar. Zur Ermittlung des Füllkennwertes dient insbesondere ein Zustandssensor des Nutzfahrzeuges, insbesondere der Abgasnachbehandlungseinrichtung, der beispielsweise als ein Abgasdrucksensor und als ein Differenzdrucksensor ausgeführt ist.

Üblicherweise geht mit einem sehr hohen Füllkennwert auch ein erhöhtes Risiko für Beschädigungen des Verbrennungsmotors und/oder der Abgasnachbehandlungseinrichtung einher. Um das Risiko zu minimieren, ist es vorteilhaft, die Regeneration frühzeitig und damit insgesamt häufiger durchzuführen. Andererseits bedeutet jede durch die Steuerungseinrichtung eingeleitete Regeneration eine Einschränkung. Folglich stellt der Regenerationsgrenzwert, bei dessen Erreichen die Regeneration durchzuführen ist, einen Kompromiss dar. Der kompromissgemäße Zeitpunkt wird nun bevorzugt in Abhängigkeit von dem Parameter weiter optimiert. Besonders bevorzugt fließt hier auch die Umgebungsvariable ein. Die Optimierung des Zeitpunkts beinhaltet bevorzugt, dass der Zeitpunkt des Beginns der Regeneration zeitlich vorgezogen und/oder zeitlich verzögert wird. Dabei kann der Zeitpunkt so verschoben werden, dass die Regeneration vor, während und/oder nach der Ausführung des landwirtschaftlichen Prozesses durchgeführt wird. Alternativ wird beispielsweise anhand einer Spanne von Füllkennwerten ein Zeitraum prädiktiv bestimmt, innerhalb dessen die Regeneration stattzufinden hat. In Abhängigkeit von dem zumindest einen Parameter wird anschließend der konkrete Zeitpunkt für die Regeneration innerhalb des Zeitraumes festgelegt.

Bevorzugt wird zumindest ein letztmöglicher Zeitpunkt prädiktiv bestimmt, zu dem die Regeneration stattzufinden hat. Letztmöglich bedeutet dabei, dass kein weiterer Betrieb des Nutzfahrzeugs ohne Einschränkungen möglich ist.

Die prädiktive Ermittlung des Zeitpunkts kann prinzipiell auf verschiedene Arten erfolgen. Beispielsweise kann der Zeitpunkt durch Verwendung eines Simulationsmodells, das den Füllkennwert unter Berücksichtigung des zumindest einen Parameters des Prozesses modelliert, und/oder anhand von Kennlinien ermittelt werden.

Vorzugsweise wird der prädiktiv bestimmte Zeitpunkt angepasst, während das Nutzfahrzeug den landwirtschaftlichen Prozess durchführt. Es findet also insbesondere eine laufende Aktualisierung des zukünftigen Zeitpunktes statt. Nimmt der Füllkennwert beispielsweise langsamer zu als erwartet, verschiebt sich dadurch der Zeitpunkt nach hinten. Diese bevorzugte Ausbildung des Verfahrens ermöglicht es, auf Umgebungseinflüsse während der Durchführung des Prozesses zu reagieren. Es ist insbesondere bevorzugt, dass die prädiktive Bestimmung des Zeitpunkts durch Verwendung eines Maschinenlernprogramms optimiert wird, sodass die Präzision stetig verbessert wird.

Bevorzugt umfasst der Prozess mehrere aktive Prozessphasen und wird die Regeneration derart gesteuert, dass sie vor Beginn derjenigen aktiven Prozessphase durchgeführt wird, innerhalb derer der prädiktiv bestimmte, zukünftige Zeitpunkt liegt. Bevorzugt umfasst die aktive Prozessphase eine vollständige oder teilweise Bearbeitung des landwirtschaftlichen Feldes. Als aktive Prozessphase ist vorzugsweise eine Prozessphase gemeint, in der das Arbeitsgerät insbesondere pausenlos seinen Hauptzweck erfüllt. Falls der Pflug das Arbeitsgerät darstellt, sind die aktiven Prozessphasen bevorzugt diejenigen Phasen des Prozesses, während derer die Pflugschare in die Erde eintauchen. Während der Feldbearbeitung ist der Pflug bei üblichen Feldgrößen und -formen mehrfach zum Wenden des Nutzfahrzeuges mit den Pflugscharen aus der Erde zu heben. Die aktiven Prozessphasen schließen das Wenden bevorzugt nicht ein. Das Wenden des Nutzfahrzeuges ist bevorzugt als inaktive Prozessphase anzusehen. Besonders bevorzugt wechseln sich aktive und inaktive Phasen während des Prozesses ab. Als weitere aktive Prozessphasen können ein Freistechen eines Feldrandes, ein Überladevorgang zum Betanken eines Transportbehälters eines Transportfahrzeugs mit Erntegut und ein Abtransport von auf dem Feld angeordneten Ballen aus Erntegut angesehen werden.

Bevorzugt wird die Regeneration durchgeführt, bevor das Arbeitsgerät beginnt, seinen Hauptzweck zu erfüllen. Da die Regeneration vor Beginn der aktiven Prozessphase durchgeführt wird, kann diese vorteilhaft ohne Unterbrechung ausgeführt werden. Stattdessen findet die Regeneration vorzugsweise während einer inaktiven Prozessphase statt oder wird der Prozess vor Beginn der aktiven Prozessphase unterbrochen, innerhalb derer der prädiktiv bestimmte, zukünftige Zeitpunkt liegt. Die Regeneration findet bevorzugt während ohnehin nicht zu vermeidender Stillstandszeiten statt, während derer beispielsweise das Nutzfahrzeug oder das Arbeitsgerät mit Kraftstoff betankt, mit Pflanzgut, Pflanzenschutz- oder Düngemittel beladen, von Erntegut geleert, umgerüstet, verladen oder gewartet wird.

In einer bevorzugten Ausbildung des Verfahrens, ist das landwirtschaftliche Nutzfahrzeug mit einem Planungssystem verbunden. Das Planungssystem umfasst insbesondere eine Software, die insbesondere zumindest auf einem zum Datenaustausch drahtlos mit dem Nutzfahrzeug verbundenen Rechner oder auf der Steuerungseinrichtung verwendet wird. Das Planungssystem erhält von dem landwirtschaftlichen Nutzfahrzeug vor oder während der Durchführung des landwirtschaftlichen Prozesses zumindest den Füllkennwert und weist dem Nutzfahrzeug in Abhängigkeit vom Füllkennwert einen landwirtschaftlichen Prozess aus mehreren geplanten landwirtschaftlichen Prozessen automatisch zur Durchführung zu. Die geplanten landwirtschaftlichen Prozesse sind bevorzugt in einer Auftragsliste hinterlegt, die von dem Planungssystem ausgelesen und verarbeitet werden. Die weiteren geplanten Prozesse werden von dem Planungssystem bevorzugt demselben oder weiteren Nutzfahrzeugen zugewiesen, mit denen das Planungssystem verbunden ist. Demselben Nutzfahrzeug werden die weiteren Prozesse besonders bevorzugt später oder zur späteren Bearbeitung zugewiesen.

Die Zuweisung des Prozesses erfolgt mit dem Ziel, Unterbrechungen des/r Prozesse/s für etwaige Regenerationen möglichst zu vermeiden. Vorzugsweise werden Prozesse, die große Leistungen von dem/den Nutzfahrzeug/en fordern, bei einem hohen Füllkennwert zugewiesen, da bei großen Leistungen eine passive Regeneration zu erwarten ist, wodurch der Füllkennwert ohne eine Unterbrechung zu senken ist. Der Prozess wird demnach anhand des Parameters des Prozesses so zugewiesen, dass die Abgasnachbehandlungseinrichtung auf möglichst passive Weise regeneriert. Da die Abgasnachbehandlungseinrichtung mit dem Verfahren vermehrt passiv regeneriert, tritt die Notwendigkeit zur aktiven Regeneration seltener auf, sodass letztendlich die Arbeitseffizienz erhöht ist.

Die Aufgabe wird weiterhin gelöst mit einem landwirtschaftliches Nutzfahrzeug, das einen Verbrennungsmotor, eine Abgasnachbehandlungseinrichtung und eine Steuerungseinrichtung umfasst.

Das erfindungsgemäße landwirtschaftliche Nutzfahrzeug zeichnet sich dadurch aus, dass es zur Durchführung des vor- und nachstehend beschriebenen Verfahrens eingerichtet ist. Insbesondere ist die Steuerungseinrichtung des Nutzfahrzeugs dazu eingerichtet, die Regeneration der Abgasnachbehandlungseinrichtung in Abhängigkeit von einer Umgebungsvariablen und/oder zumindest einem Parameter eines landwirtschaftlichen Prozesses, den das Nutzfahrzeug automatisch durchführt, zu steuern. Dadurch ist das Nutzfahrzeug in der Lage, die Regeneration der Abgasnachbehandlungseinrichtung zu einem unter Berücksichtigung von Sicherheitsaspekten und/oder Prozessoptimierungskriterien optimierten Zeitpunkt durchzuführen.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) eine schematisch dargestellte Draufsicht eines landwirtschaftlichen Nutzfahrzeugs gemäß der Erfindung, und in (b) einen schematisch dargestellten Ausschnitt eines landwirtschaftlichen Feldes, auf dem das Nutzfahrzeug betrieben wird;
- Fig. 2: ein Ablaufdiagramm eines ersten Verfahrens gemäß der Erfindung; und
- Fig. 3: ein Ablaufdiagramm eines zweiten Verfahrens gemäß der Erfindung.

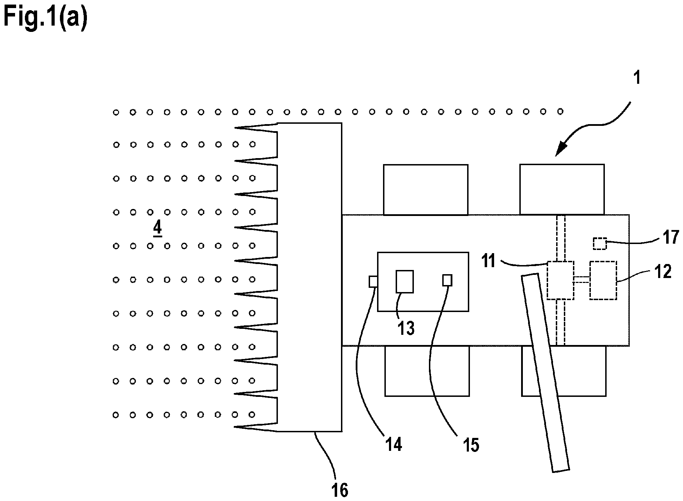

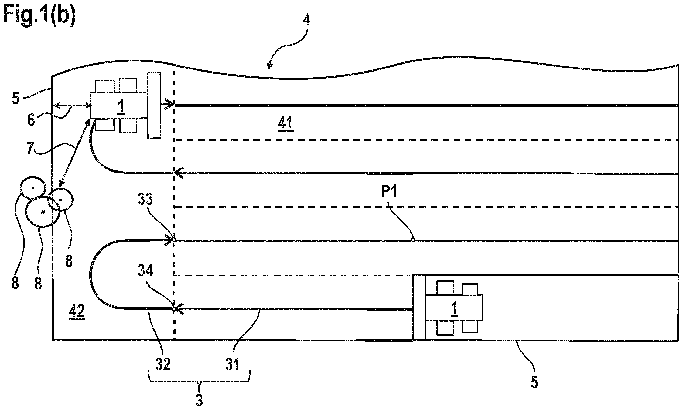

Fig. 1(a) zeigt eine schematische dargestellte Draufsicht eines landwirtschaftlichen Nutzfahrzeugs 1. Fig. 1(b) zeigt einen schematisch dargestellten Ausschnitt eines landwirtschaftlichen Feldes 4 mit dem landwirtschaftlichen Nutzfahrzeug 1.

In Fig. 1(a) ist das landwirtschaftliche Nutzfahrzeug 1 gegenüber Fig. 1(b) vergrößert dargestellt. Das landwirtschaftliche Nutzfahrzeug 1 ist hier exemplarisch als eine Erntemaschine 1 mit einem Anbaugerät 16 dargestellt. Das Nutzfahrzeug 1 ist zur automatischen Durchführung eines landwirtschaftlichen Prozesses ausgebildet, der durch mehrere Parameter gekennzeichnet ist. Bei dem landwirtschaftlichen Prozess handelt es sich hier um die Ernte von auf dem landwirtschaftlichen Feld 4 gewachsenen Früchten.

Das landwirtschaftliche Nutzfahrzeug 1 umfasst einen Verbrennungsmotor 11, der durch Verbrennung von Kraftstoff Leistung für einen Fahrantrieb, ein Verarbeitungsaggregat des Nutzfahrzeugs 1 und/oder das Anbaugerät 16 bereitstellt. Das Nutzfahrzeug 1 umfasst ferner eine Abgasnachbehandlungseinrichtung 12 zur Nachbehandlung der bei der Verbrennung erzeugten Abgase des Verbrennungsmotors 11. Die Abgasnachbehandlungseinrichtung 12 ist regenerierbar ausgebildet. Die Regeneration erfolgt, indem in der Abgasnachbehandlungseinrichtung 12 angesammelte Partikel durch eine Erhöhung einer Abgastemperatur verbrannt werden. Die Regeneration wird von einer Steuerungseinrichtung 13 des Nutzfahrzeuges 1 gesteuert.

Das Nutzfahrzeug umfasst Sensoren 14, 15 zur Ermittlung einer Umgebungsvariablen. Die Steuerungseinrichtung 13 ist dazu eingerichtet, die Regeneration in Abhängigkeit von den Umgebungsvariablen zu steuern. Außerdem ist die Steuerungseinrichtung 13 dazu eingerichtet, die Regeneration in Abhängigkeit von einem Parameter des landwirtschaftlichen Prozesses zu steuern.

Die Steuerungseinrichtung 13 steuert die Regeneration, indem sie einen Zeitpunkt des Beginns der Regeneration bestimmt und die Regeneration zu diesem Zeitpunkt durchführt. So berücksichtigt die Steuerungseinrichtung 13 die Umgebung und den Prozess bei der Bestimmung des Regenerationszeitpunkts.

Fig. 1(b) zeigt einen Ausschnitt des landwirtschaftlichen Feldes 4, auf der das landwirtschaftliche Nutzfahrzeug 1 operiert. Zu sehen ist eine Feldgrenze 5 des landwirtschaftlichen Feldes 4, das in einen Bearbeitungsbereich 41 und einen Vorgewendebereich 42 unterteilt dargestellt ist.

Exemplarisch ist in Fig. 1 (b) eine Ansammlung von Bäumen als Objekte 8 dargestellt. Die Objekte 8 sind als Teil der Umgebung anzusehen.

Ein erster der Sensoren 14, 15 ermittelt einen Abstand 6 von der Feldgrenze 5. Ein zweiter der Sensoren 14, 15 ermittelt einen Abstand 7 vom nächstliegenden Objekt 8. Die Steuerungseinrichtung 13 steuert die Regeneration derart, dass die Regeneration nur durchgeführt wird, falls die gemessenen Abstände 6, 7 oberhalb eines Minimalabstandes liegen. Die Regeneration wird daher so gesehen in Abhängigkeit von dem Abstand 6, 7 gesteuert. Dabei wird die Regeneration so lange verhindert, bzw. nicht ausgeführt, bis sich das Nutzfahrzeug 1 weit genug vom Objekt 8 und von der Feldgrenze 5 entfernt hat.

Das landwirtschaftliche Nutzfahrzeug 1 weist einen Objekterfassungssensor 14 auf, der dazu vorgesehen ist, das Objekt 8 in der Umgebung des Nutzfahrzeugs 1 sowie dessen Abstand 7 vom Nutzfahrzeug 1 zu erfassen. Der Objekterfassungssensor 14 kann als ein Ultraschallsensor, ein Laserscanner und/oder eine Kamera ausgeführt sein und hat eine parallel zur Aufstandsebene des Nutzfahrzeuges ausgerichtete Messrichtung. Der Objekterfassungssensor 14 ist weiterhin dazu vorgesehen, die Feldgrenze 5 des landwirtschaftlichen Feldes 4 zu erkennen und den Abstand 6 zur Feldgrenze 5 sowie dessen Abstand vom Nutzfahrzeug 1 zu erfassen.

Das landwirtschaftliche Nutzfahrzeug 1 weist einen GPS-Sensor 15 auf, der dazu vorgesehen ist, eine Position des Nutzfahrzeugs 1 zu ermitteln. Mit Hilfe des GPS-Sensors 15 ist zusätzlich zu dem Objekterfassungssensor 14 der Abstand 6, 7 zu dem nächstliegenden Objekt 8 und der Feldgrenze 5 erfassbar. Dafür werden Navigationsdaten verwendet, die zumindest eine Information zu einem Standort des Objekts 8 und/oder der Feldgrenze 5 umfassen. Die Steuerungseinrichtung 13 ist dazu eingerichtet, den Standort des Objekts 8 und/oder der Feldgrenze 5 mit der Position des Nutzfahrzeugs 1 abzugleichen und so den Abstand 6, 7 zu bestimmen.

In der dargestellten Ausführungsform umfasst der landwirtschaftliche Prozess zumindest eine automatische Bearbeitung des Bearbeitungsbereichs 41 des Feldes 4 entlang einer Fahrtroute 3. Die Fahrtroute 3 wird dabei vor Bearbeitung des Bearbeitungsbereichs 41 erstellt und der Steuerungseinrichtung 13 bereitgestellt.

Hier exemplarisch umfasst die Fahrtroute 3 geradlinige Routenelemente 31 innerhalb des Bearbeitungsbereichs 41, sowie kurvenartige Routenelemente 32 zum Wenden des landwirtschaftlichen Nutzfahrzeugs 1 in dem Vorgewendebereich 42. Der Prozess weist verschiedene Phasen auf. Dabei wird zwischen aktiven Prozessphasen, in denen das Nutzfahrzeug 1 entlang der geradlinigen Routenelementen 31 gesteuert wird und das Arbeitsgerät seinen Hauptzweck erfüllt, und inaktiven Phasen, in denen das Nutzfahrzeug 1 entlang der kurvenartigen Routenelementen 32 gesteuert wird und das Arbeitsgerät seinen Hauptzweck nicht erfüllt, unterschieden. Die aktiven Prozessphasen weisen demnach jeweils einen Startpunkt 33 und einen Endpunkt 34 auf, wobei jeder Endpunkt 34 der aktiven Prozessphasen einen Startpunkt der darauffolgenden inaktiven Prozessphase darstellt.

Das Nutzfahrzeug 1 weist einen Zustandssensor 17 auf, der dazu vorgesehen ist, einen Füllkennwert, der einen Regenerationsbedarf der Abgasnachbehandlungseinrichtung 12 kennzeichnet, zu erfassen. Der Füllkennwert kennzeichnet einen Zustand der Abgasnachbehandlungseinrichtung 12. Die Steuerungseinrichtung 13 ist in der Lage, einen zukünftigen Zeitpunkt, zu dem der Füllkennwert einen Regenerationsgrenzwert erreicht, in Abhängigkeit vom zumindest einem der Parameter prädiktiv zu bestimmen. Da der Prozess durch die Fahrtroute 3 definiert ist, kann prinzipiell zu dem Zeitpunkt auch der zugeordnete Wegpunkt P1 entlang der Fahrtroute 3 bestimmt werden.

Der Wegpunkt P1 liegt in einer der aktiven Prozessphasen. Die Regeneration wird durch die Steuerungseinrichtung 13 so gesteuert, dass sie vor Beginn der aktiven Prozessphase, in der der Wegpunkt P1 liegt, durchgeführt wird. In diesem Fall wird sie in der davorliegenden inaktiven Phase, d.h. vor oder am Startpunkt 33, durchgeführt.

Das landwirtschaftliche Nutzfahrzeug 1 ist ferner mit einem Planungssystem verbunden, das in den Fig. nicht dargestellt ist.

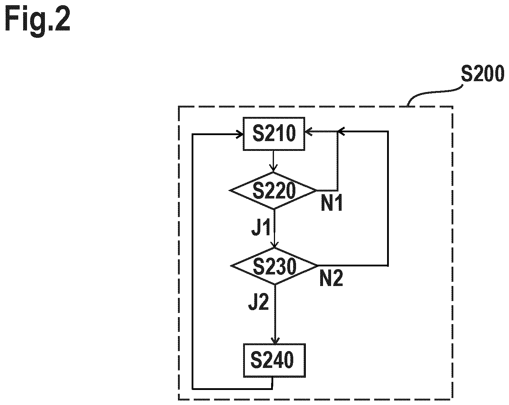

Fig. 2 zeigt ein Ablaufdiagramm zur Veranschaulichung eines ersten erfindungsgemäßen Verfahrens. Das Verfahren betrifft den Betrieb des landwirtschaftlichen Nutzfahrzeugs 1 der Fig. 1 und wird daher unter Zuhilfenahme der Fig. 1 beschrieben. Das landwirtschaftliche Nutzfahrzeug 1 wird während der Durchführung eines landwirtschaftlichen Prozesses S200 betrieben. In einem ersten Schritt S210 wird ein Verbrennungsmotor 11 des landwirtschaftlichen Nutzfahrzeugs 1 betrieben, um mechanische Leistung zur Durchführung des landwirtschaftlichen Prozesses bereitzustellen. Im selben Schritt S210 werden Abgase des Verbrennungsmotors 11 von einer Abgasnachbehandlungseinrichtung 12 des Nutzfahrzeugs 1 nachbehandelt.

Bei S220 wird der Füllkennwert von einem Zustandssensor 17 erfasst und mit einem Regenerationsgrenzwert abgeglichen. Die Erfassung des Füllkennwerts erfolgt während des Betriebs des Verbrennungsmotors in regelmäßigen Zeitabständen. Falls der erfasste Füllkennwert unterhalb des Regenerationsgrenzwertes liegt, findet, wie durch den Zweig N1 veranschaulicht, nichts weiter statt und wiederholt sich das vorstehend Beschriebene.

Falls der erfasste Füllkennwert den Regenerationsgrenzwert erreicht hat, erfolgt, wie durch Zweig J1 veranschaulicht, bei S230 eine Überprüfung der Umgebungsvariablen, bei der es sich um Abstände 6, 7 handelt. Liegen beide Abstände 6, 7 oberhalb eines Minimalabstandes, wird, wie durch Zweig J2 veranschaulicht, bei S240 die Regeneration durchgeführt und das Verfahren beginnt erneut. Liegt dagegen einer der Abstände 6, 7 unterhalb des Minimalabstandes, wird, wie durch Zweig N2 veranschaulicht, keine Regeneration durchgeführt. Anschließend wird zunächst der Füllkennwert neu erfasst, da er, während zumindest einer der Abstände 6, 7 noch unterhalb des Minimalabstandes liegt, durch eine passive Regeneration unter den Regenerationsgrenzwert gesunken sein könnte, wodurch die Einleitung der Regeneration durch die Steuerungseinrichtung 13 nicht mehr nötig wäre.

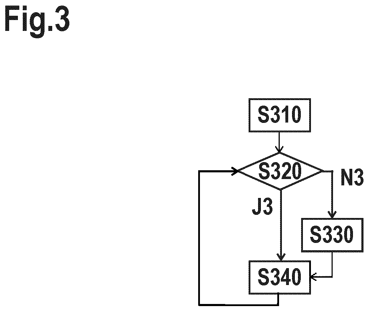

Fig. 3 zeigt ein Ablaufdiagramm zur vereinfachten Veranschaulichung eines zweiten erfindungsgemäßen Verfahrens gemäß der vorliegenden Erfindung. Das Verfahren betrifft ebenfalls den Betrieb des landwirtschaftlichen Nutzfahrzeugs 1 der Fig. 1 und wird daher unter Zuhilfenahme der Fig. 1 beschrieben.

Das zweite Verfahren betrifft wiederum die automatische Durchführung eines landwirtschaftlichen Prozesses und seine Vorbereitung. Vor der Durchführung des Prozesses wird bei S310 mittels zumindest eines den Prozess definierenden Parameters ein zukünftiger Zeitpunkt prädiktiv bestimmt. Es handelt sich dabei um den Zeitpunkt, zu dem der Füllkennwert den Regenerationskennwert erreichen wird. Anschließend findet eine Überprüfung S320 dessen statt, ob der prädiktiv bestimmte Zeitpunkt in einer aktiven Prozessphase des landwirtschaftlichen Prozesses liegt. Ist das nicht der Fall, findet, wie durch Zweig N3 veranschaulicht, die Regeneration S340 zum berechneten Zeitpunkt statt. Liegt der prädiktiv bestimmte Zeitpunkt jedoch in einer aktiven Prozessphase, so findet, wie durch Zweig J3 veranschaulicht, eine Verschiebung S330 des Zeitpunktes in eine vor der aktiven Prozessphase stattfindende passive Prozessphase statt, in der die Regeneration S340 durchgeführt wird.

## Patentansprüche

1. Verfahren zum Betreiben eines landwirtschaftlichen Nutzfahrzeugs (1), das einen Verbrennungsmotor (11), eine Abgasnachbehandlungseinrichtung (12) und eine Steuerungseinrichtung (13) umfasst, wobei der Verbrennungsmotor (11) durch eine Verbrennung eines Kraftstoffs Abgase erzeugt, die Abgasnachbehandlungseinrichtung (12) die Abgase nachbehandelt, und die Steuerungseinrichtung (13) eine Regeneration der Abgasnachbehandlungseinrichtung (12) steuert,
**dadurch gekennzeichnet, dass** mittels eines Sensors (14, 15) eine Umgebungsvariable ermittelt wird und die Regeneration in Abhängigkeit von der Umgebungsvariablen (6, 7) gesteuert wird.

2. Verfahren nach Anspruch 1, **dadurch gekennzeichnet, dass** die Regeneration derart gesteuert wird, dass ein Zeitpunkt eines Beginns der Regeneration in Abhängigkeit von der Umgebungsvariablen (6, 7) bestimmt wird.

3. Verfahren nach einem der vorherigen Ansprüche, **dadurch gekennzeichnet, dass** mittels des Sensors (14, 15) ein Abstand (6) von einer Feldgrenze (5) eines landwirtschaftlichen Feldes (4), auf dem das Nutzfahrzeug (1) betrieben wird, als Umgebungsvariable (6) ermittelt wird.

4. Verfahren nach einem der vorherigen Ansprüche, **dadurch gekennzeichnet, dass** mittels des Sensors (14, 15) ein Abstand (7) von einem nächstliegenden Objekt (8) der Umgebung, insbesondere einem Baum oder einem Gebäude, als Umgebungsvariable (7) ermittelt wird.

5. Verfahren nach einem der vorherigen Ansprüche, **dadurch gekennzeichnet, dass** als Sensor (15) ein GPS-Sensor (15) des Nutzfahrzeuges (1) verwendet wird.

6. Verfahren nach einem der vorherigen Ansprüche, **dadurch gekennzeichnet, dass** als Sensor (14) ein Objekterfassungssensor (14) des Nutzfahrzeugs (1) verwendet wird, der insbesondere als ein Lasersensor, Ultraschallsensor oder optischer Sensor ausgebildet ist.

7. Verfahren nach einem der vorherigen Ansprüche, **dadurch gekennzeichnet, dass** der Objekterfassungssensor (14) zumindest eine Messrichtung hat, die zumindest anteilig parallel oder zumindest anteilig rechtwinklig zu einer Aufstandsebene des Nutzfahrzeuges (1) ausgerichtet ist.

8. Verfahren nach einem der vorherigen Ansprüche oder zum Betreiben eines landwirtschaftlichen Nutzfahrzeugs (1), das einen Verbrennungsmotor (11), eine Abgasnachbehandlungseinrichtung (12) und eine Steuerungseinrichtung (13) umfasst, wobei der Verbrennungsmotor (11) durch eine Verbrennung eines Kraftstoffs Abgase erzeugt, die Abgasnachbehandlungseinrichtung (12) die Abgase nachbehandelt, und die Steuerungseinrichtung (13) eine Regeneration der Abgasnachbehandlungseinrichtung (12) steuert,
**dadurch gekennzeichnet, dass** die Regeneration in Abhängigkeit von zumindest einem Parameter eines landwirtschaftlichen Prozesses, den das Nutzfahrzeug (1) automatisch durchführt, gesteuert wird.

9. Verfahren nach einem der vorherigen Ansprüche, **dadurch gekennzeichnet, dass** die Steuerungseinrichtung (13) zumindest einen zukünftigen Zeitpunkt, zu dem ein Füllkennwert der Abgasnachbehandlungseinrichtung (12), der einen Bedarf zur Regeneration kennzeichnet, einen Regenerationsgrenzwert erreicht, anhand des Parameters prädiktiv bestimmt.

10. Verfahren nach einem der vorherigen Ansprüche, **dadurch gekennzeichnet, dass** der zukünftige Zeitpunkt angepasst wird, während das Nutzfahrzeug (1) den landwirtschaftlichen Prozess durchführt.

11. Verfahren nach einem der vorherigen Ansprüche, **dadurch gekennzeichnet, dass** der Prozess mehrere aktive Prozessphasen umfasst und die Regeneration derart gesteuert wird, dass sie vor Beginn derjenigen aktiven Prozessphase durchgeführt wird, innerhalb derer der zukünftige Zeitpunkt liegt.

12. Verfahren nach einem der vorherigen Ansprüche, **dadurch gekennzeichnet, dass** das landwirtschaftliche Nutzfahrzeug (1) mit einem Planungssystem verbunden ist, das von dem Nutzfahrzeug (1) vor der automatischen Durchführung des Prozesses den Füllkennwert erhält und dem landwirtschaftlichen Nutzfahrzeug (1) in Abhängigkeit vom Füllkennwert einen landwirtschaftlichen Prozess aus mehreren geplanten landwirtschaftlichen Prozessen automatisch zur Durchführung zuweist.

13. Landwirtschaftliches Nutzfahrzeug (1), umfassend einen Verbrennungsmotor (11), eine Abgasnachbehandlungseinrichtung (12), und eine Steuerungseinrichtung (13),
**gekennzeichnet durch** eine Ausbildung zur Durchführung des Verfahrens nach einem der vorherigen Ansprüche.
